# EUROPÄISCHE PATENTSCHRIFT

(11) **EP 0 462 401 B1**
(45) Veröffentlichungstag und Bekanntmachung des Hinweises auf die Patenterteilung: **12.04.1995**
(21) Anmeldenummer: 91107925.9
(22) Anmeldetag: 16.05.1991
(51) Int. Cl.: B60K 41/02

(54) **Arbeitsfahrzeug**
Working vehicle
Engin de travail

(30) Priorität: 22.05.1990 US 527226
(43) Veröffentlichungstag der Anmeldung: 27.12.1991
(73) Patentinhaber: DEERE & COMPANY, Moline, Illinois 61265 (US)
(72) Erfinder: Seeba, Alan Lloyd, Dubuque, Iowa 52001 (US)
(74) Vertreter: Feldmann, Bernhard

(56) Entgegenhaltungen:
- EP-A- 0 101 184
- EP-A- 0 363 634
- DE-A- 1 931 040
- DE-A- 3 235 396
- FR-A- 2 397 676
- US-A- 4 142 614

## Beschreibung

Die Erfindung betrifft ein Fahrzeug gemäß den Merkmalen des Oberbegriffs des Patentanspruchs 1.

Viele Arbeitsfahrzeuge, wie beispielsweise Gleiskettenfahrzeuge, Planierraupen und Lader, enthalten hydraulische Getriebe für die Übertragung von Drehzahlen und Drehmomenten zwischen Motor und Antriebsstrang des Endantriebes. Bei einer Ausführung für das hydraulische Getriebe handelt es sich um einen Drehmomentenwandler, der einerseits als Kupplung wirkt und Leistung zwischen dem Motor und einem Zahnradgetriebe zu- und abschaltet und andererseits als Getriebe wirkt, das eine größere Anzahl von Übersetzungsverhältnissen bereitstellt. Eine andere Ausführung von hydraulischen Getrieben ist durch hydrostatische Getriebe gegeben, welche das Drehmoment von dem Motor zum Antriebsstrang der Endantriebe übertragen.

Bei einem sich kriechend oder langsam dicht an einen Gegenstand annähernden Fahrzeug steuert die Bedienungsperson eines Arbeitsfahrzeuges, welches einen Drehmomentenwandler enthält, die Bewegung des Fahrzeuges durch ein Verzögerungspedal. Durch das Verzögerungspedal läßt sich die Betriebsleistung des Motors und damit der Betrag des an den Drehmomentenwandler abgegebenen Drehmomentes sowie die Drehzahl einstellen. Wird das Verzögerungspedal ganz heruntergedrückt, so kann das Fahrzeug durch Betätigen des Bremspedals zum Stehen gebracht werden, ohne es abzuwürgen, da der Drehmomentenwandler einen gewissen Schlupf zuläßt.

Arbeitsfahrzeuge mit Direktantrieb, bei denen ohne Zwischenschaltung eines hydraulischen Drehmomentenwandlers die Leistung formschlüssig von dem Motor auf den Endantrieb übertragen wird, sind leistungsfähiger als Fahrzeuge mit Drehmomentenwandler, jedoch ist hier die Gefahr des Abwürgens des Motors beim Anhalten gegeben. Die Bedienungsperson muß daher bei diesen Fahrzeugen drei Pedale bedienen, wenn sie das Fahrzeug in engem Revier manövriert. Durch volles Herunterdrücken des Verzögerungspedals wird der Motor nicht von dem Antriebsstrang abgekuppelt. Um nahe an einen Gegenstand heranzufahren, muß die Bedienungsperson zunächst das Verzögerungspedal niederdrücken, um das Fahrzeug zu verlangsamen, und dann das Kupplungspedal durchtreten, um den Motor auszukuppeln und ein Abwürgen zu vermeiden. Schließlich wird das Bremspedal betätigt, um das Fahrzeug ganz zum Stehen zu bringen.

Die EP-A-0 363 634 beschreibt ein Fahrzeug nach dem Oberbegriff des Anspruchs 1, bei dem das Bremsen und Beschleunigen durch Betätigung lediglich eines Pedals möglich sein soll, um eine Verwechslung der Pedale und damit gefährliche Fahrzustände zu vermeiden. Mit einer anfänglichen Betätigung des Gaspedals wird das Fahrzeug durch Öffnen der Drosselklappe des Motors zunächst beschleunigt. Wird der Pedaldruck über einen vorherbestimmbaren Wert hinaus erhöht, so wird die Drosselklappe geschlossen, und die Bremsen werden angelegt. Mit dem Übergang vom Gasgeben zum Bremsen wird die Steigung der Pedalkraftkennlinie sprunghaft erhöht. Ferner wird vorgeschlagen, die Kupplung auszurücken, wenn die Drosselklappe geschlossen wird. Es werden keine Maßnahmen beschrieben, die die Arbeitsweise eines Gleiskettenfahrzeuges oder dergleichen erleichtern könnten.

Aus der DE-A-32 35 396 geht ein Kraftfahrzeug mit einem Drehmomentenwandler zwischen Motor und Getriebe hervor. Der Wandler ist mit einer Wandlerüberbrückungskupplung überbrückbar, welche von einer Getriebesteuereinheit in Abhängigkeit von Betriebszuständen gesteuert wird. Fällt die Motordrehzahl infolge Gaswegnahme ab, so wird die Kupplung geschlossen, um eine starre Antriebsverbindung zwischen Motor und Getriebe zu erhalten. Bei Erreichen einer Wiedereinsetz-Drehzahl, bei der wieder Kraftstoff zugeführt wird, wird die Kupplung geöffnet. Auch diese Druckschrift zeigt keine Lösungswege für die oben beschriebenen Probleme auf.

Die mit der Erfindung zu lösende Aufgabe wird darin gesehen, ein Arbeitsfahrzeug mit den Merkmalen des Oberbegriffs des Patentanspruchs 1 anzugeben, das sich einfach bedienen läßt und bei dem ein Abwürgen zuverlässig vermieden werden kann. Insbesondere soll die Antriebsmaschine von den Antriebsrädern oder Ketten durch einfache Maßnahmen abkuppelbar sein, wenn das Fahrzeug abgebremst wird und zum Stehen kommt.

Die Aufgabe wird erfindungsgemäß durch die kennzeichnenden Merkmale des Patentanspruchs 1 gelöst. Als Betätigungsvorrichtung zur Drosselung der Kraftstoffzufuhr kommt vorzugsweise ein Verzögerungspedal und das zur Kraftstoffzufuhreinrichtung des Verbrennungsmotors führende Gestänge in Betracht.

Bei dieser Lösung läßt sich durch Niederdrücken des Verzögerungspedales, durch das das Fahrzeug mit Direktantrieb zum Stehen gebracht wird, der Antriebsmotor automatisch von den Antriebsrädern oder Ketten trennen, so daß ein Abwürgen des Motors vermieden wird. Hierzu ist lediglich ein einfacher Mechanismus erforderlich.

Vorzugsweise ist der Mechanismus mit einem hydraulischen Regulierkreis eines Lastschaltgetriebes derart gekoppelt, daß die Kupplung auf zeitlich abgestimmte Art wiedereingerückt wird. Als Kupplungen, die durch den Mechanismus ein- und ausgerückt werden, kommen Vorwärts- oder Rückwärtskupplungen des Lastschaltgetriebes in Betracht.

Gemäß einer Ausgestaltung der Erfindung ist ein Magnetventil vorgesehen, das hydraulisch zwischen einem Druckspeicher der Steuerhydraulik des Lastschaltgetriebes und dem Sumpf angeordnet ist. Das Magnetventil wird elektrisch durch einen Schalter gesteuert, der durch das Verzögerungspedalgestänge schaltbar ist und das Magnetventil erregt, wenn das Verzögerungspedal ganz runtergetreten ist. Ist das Magnetventil erregt, so verbindet es den Druckspeicher über den Ventilkörper eines Rastschiebers des Geschwindigkeitssteuerventils mit dem Sumpf. Ist der Druckspeicher mit dem Sumpf verbunden, so vermindert sich der Hydraulikdruck, der die Vorwärts- oder Rückwärtskupplung in Eingriff hält, und die Kupplung kann rutschen, wenn eine Bremskraft an das Fahrzeug angelegt wird.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die Seitenansicht eines Gleiskettenarbeitsfahrzeuges,
- Fig. 2: die perspektivische Darstellung des Gaspedalgestänges,
- Fig. 3: die schematische Darstellung eines Lastschaltgetriebes im ersten Gang,
- Fig. 4: die schematische Darstellung eines Lastschaltgetriebes, bei dem ein elektrischer Schalter geschlossen ist, um die Kupplung auszurücken,
- Fig. 5: die graphische Darstellung des Vorwärts- oder Rückwärtskupplungsdruckes während der Schaltzeit eines Gangwechsels und
- Fig. 6: die graphische Darstellung des Vorwärts- oder Rückwärtskupplungsdruckes während der Zeitspanne eines Auskuppelvorganges.

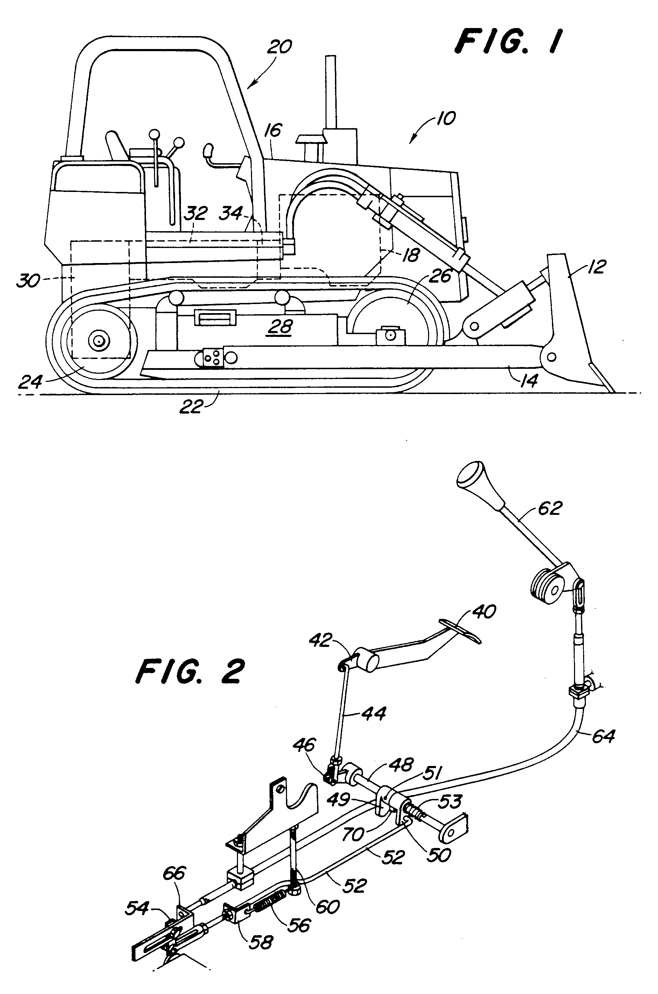

Aus Fig. 1 geht ein Gleiskettentraktor 10 mit einer Planierschaufel 12 hervor, die durch geeignete Gestänge 14 am Traktor 10 befestigt ist. Das Fahrzeug enthält einen Rahmen 16, der einen Verbrennungsmotor 18 (gestrichelte Linien) einschließt, und einen Bedienungsstand 20. Das Fahrzeug wird durch Gleisketten 22 vorwärtsbewegt, welche mit hinteren Hauptantriebskettenrädern 24 und Leitkettenrädern 26 in Eingriff stehen. Sie werden durch die Hauptantriebskettenräder 24 angetrieben. Die Gleisketten 22 werden durch die Spann- und Rücklaufvorrichtungen 28 gespannt.

Die Hauptantriebskettenräder 24 sind mit dem Kupplungs-Brems-Steuersystem 30 (gestrichelte Linien) gekoppelt, welches seinerseits mit dem Lastschaltgetriebe 32 (gestrichelte Linien) in Verbindung steht. Das Lastschaltgetriebe 32 ist über eine Hauptkupplung 34 an den Verbrennungsmotor 18 angeschlossen.

Auch wenn die vorliegende Erfindung im folgenden im Zusammenhang mit einem Planierfahrzeug mit Stahlgleisketten beschrieben wird, für die sie besonders gut geeignet ist, läßt sie sich bei jedem Fahrzeug, das einen formschlüssigen Antrieb aufweist, anwenden.

Fig. 2 stellt das Einstellgestänge für die Kraftstoffeinspritzung mit einem Gasreduziergestänge und einem Gaseinstellgestänge dar. Das Gasreduziergestänge enthält ein Pedal 40 mit einem ersten Winkelhebel 42. Dieser ist schwenkbar an dem Boden des Bedienungsstandes 20 befestigt. Eine Stange 44 verbindet den ersten Winkelhebel 42 mit einem zweiten Winkelhebel 46. Der zweite Winkelhebel 46 ist an einer Welle 48 befestigt.

Die Welle 48 dreht bei Betätigung des Pedals 40 einen dritten Winkelhebel 49, der durch eine Schraube 51 an der Welle 48 befestigt ist. Ein vierter Winkelhebel 50 ist drehbar auf der Welle 48 angrenzend an den dritten Winkelhebel 49 angeordnet. Der vierte Winkelhebel 50 enthält einen in Fig. 2 nicht sichtbaren Mitnehmer, auf dem ein elektrischer Schalter 70 befestigt ist. Das Schaltelement des elektrischen Schalters 70 wird durch eine Feder 53 gegen den dritten Winkelhebel 49 gedrückt. Ein Ende der Feder 53 ist auf der Welle 48 eingespannt, und das andere Ende der Feder 53 wirkt auf den vierten Winkelhebel 50.

Der vierte Winkelhebel 50 steht mit einer Stange 52 in Verbindung. Diese ist mit einem Einstellhebel 54 für die Kraftstoffeinspritzung gekoppelt, welcher seinerseits den Kraftstoffdurchfluß zum Verbrennungsmotor 18 steuert. Das Pedal ist durch eine Feder 56, die durch ein Winkeleisen 58 mit der Stange 52 verbunden ist, in eine obere nicht niedergedrückte Stellung vorgespannt. Die Feder 56 ist über eine Schraube 60 an dem Fahrzeugrahmen 16 befestigt.

Das Gaseinstellgestänge enthält einen Gashebel 62, der schwenkbar am Fahrzeugrahmen befestigt ist. Der Gashebel 62 steht über einen Seilzug 64 und ein Schlitzblech 66 mit dem Einstellhebel 54 für die Krafteinspritzung in Verbindung. Der längliche Schlitz in dem Schlitzblech 66 ermöglicht eine Leerhubverbindung zwischen dem Seilzug 64 und dem Einstellhebel 54. Diese Leerhubverbindung ermöglicht es dem Verzögerungspedal 40, die durch den Gashebel 62 vorgenommene Einstellung der Motorausgangsleistung durch Übergehen der Begrenzung auszuschalten.

Drückt eine Bedienungsperson das Verzögerungspedal 40 herunter, so dreht sich die Welle 48 im Uhrzeigersinn. Der dritte Winkelhebel 49 wird ebenfalls im Uhrzeigersinn verdreht. Die Feder 53 drückt den vierten Winkelhebel 50 auf den dritten Winkelhebel 49, so daß der vierte Winkelhebel 50 der Drehung des dritten Winkelhebels 49 folgt. Wenn der Einstellhebel 54 für die Kraftstoffeinspritzung seine untere Ruhestellung erreicht, die durch einen Anschlag am Kraftstoffinjektor vorgegeben ist, wird die Drehbewegung des dritten Winkelhebels 49 nicht mehr auf den vierten Winkelhebel 50 übertragen, da sich die Wirkung des Anschlags des Kraftstoffinjektors durch die Stange 52 auf den vierten Winkelhebel 50 mitteilt, so daß eine weitere Verdrehung des vierten Winkelhebels 50 verhindert wird. Sobald der dritte und vierte Winkelhebel nicht mehr gemeinsam verdreht werden, wird das Kontaktelement des elektrischen Schalters 70 nicht mehr durch den dritten Winkelhebel 49 heruntergedrückt. Somit schließt sich der elektrische Schalter 70. Bei geschlossenem Schalter 70 wird eine Magnetspule 136 erregt.

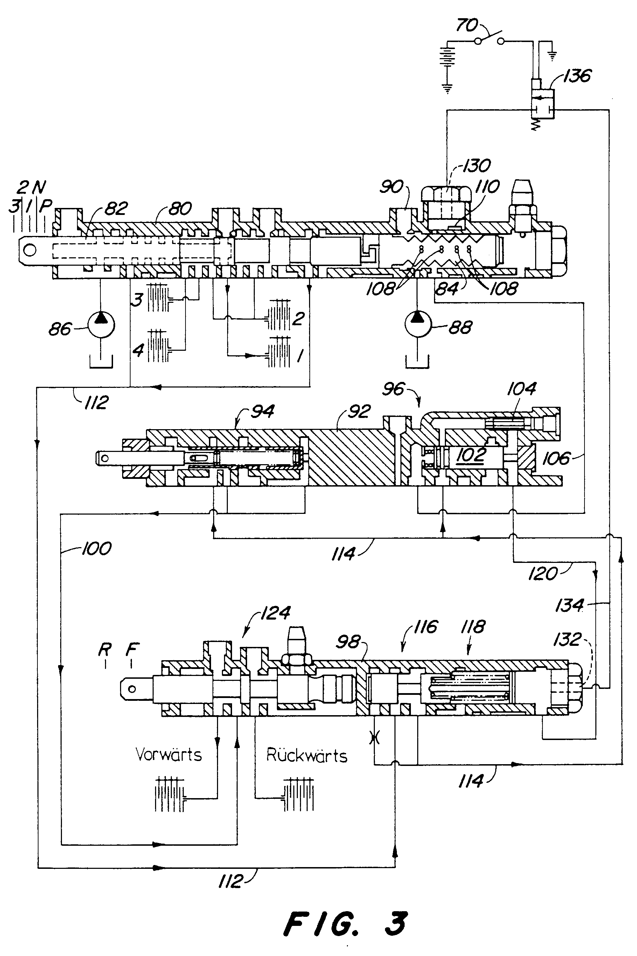

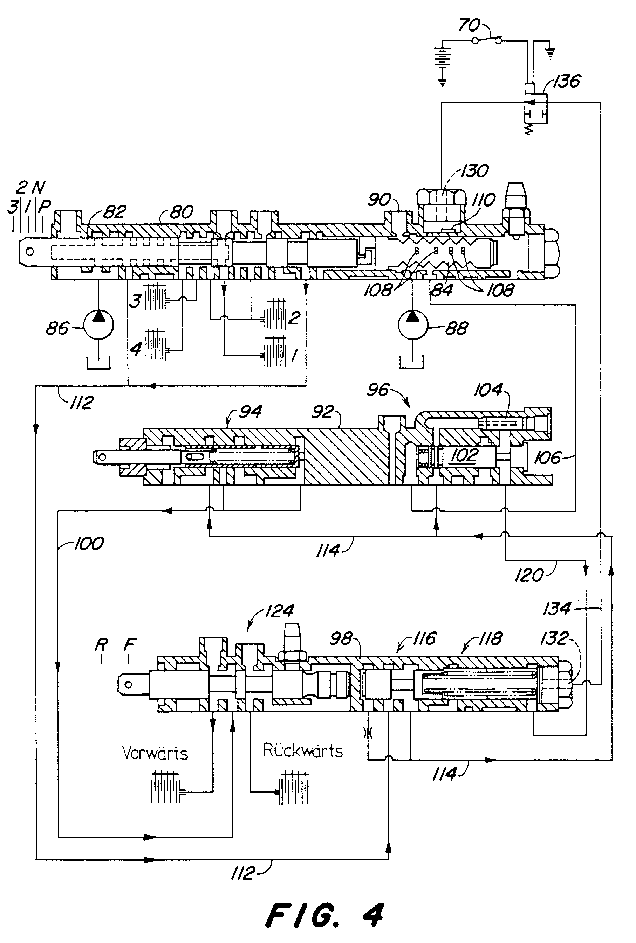

Die Figuren 3 und 4 stellen Steuerventile des Lastschaltgetriebes, das sich im ersten Gang befindet, dar. Der zuoberst dargestellte Ventilkörper 80 enthält einen Gangwahlsteuerschieber 82 für die Geschwindigkeitseinstellung sowie einen Rastschieber 84. Der Geschwindigkeitsschieber 80 steuert den Hydraulikflüssigkeitsstrom, der von einer Hydraulikdruckquelle 86 herrührt. Eine Hydraulikdruckquelle 88 liefert die Hydraulikflüssigkeit für den Rastschieber 84.

In Abhängigkeit einer durch die Bedienungsperson veranlaßten Verschiebung lenkt der Gangwahlsteuerschieber 82 Flüssigkeit von der Hydraulikquelle 86 wahlweise zu hydraulischen Kupplungspaketen für einen ersten, zweiten, dritten oder vierten Gang. Gemäß den Figuren 3 und 4 befindet sich der Gangwahlsteuerschieber 82 in seiner dem ersten Gang entsprechenden Lage und lenkt Hydraulikflüssigkeit zu dem hydraulischen Kupplungspaket, durch das der erste Gang eingestellt wird.

Mit dem Gangwahlsteuerschieber 82 wird auch der Rastschieber 84 verschoben. In der Position, die in den Figuren 3 und 4 dargestellt ist und dem ersten Gang entspricht, leitet der Rastschieber 84 Hydraulikdruckflüssigkeit von der Quelle 88 durch den Anschluß 90 zu dem Lenkventil und den Lenkbremskolben.

Der zweite Ventilkörper 92 beherbergt zwei Ventile, das Kupplungsventil 94 und das Rücklaufventil 96. Das Kupplungsventil 94 wird durch die Bedienungsperson verschoben, um über die Leitung 100 den dritten Ventilkörper 98 mit Druckflüssigkeit zu versorgen, wodurch sich die Vorwärtsoder Rückwärtskupplung einrücken läßt.

Das Rücklaufventil 96 enthält einen federvorgespannten Rücklaufschieber 102 und Verzögerungsdrosseln 104 zur Einstellung der Verstellgeschwindigkeit. Durch diese Verzögerungsdrosseln 104 läßt sich die Geschwindigkeit des Modulationszyklusses steuern, d. h. durch die Verzögerungsdrosseln 104 kann vorgegeben werden, wie schnell die Vorwärts- oder Rückwärtskupplungen nach einer Gangeinstellung wieder in Eingriff gebracht werden.

Durch eine Leitung 106 steht die federbeaufschlagte Seite des Rücklaufschiebers 102 mit dem Rastschieber 84 in Verbindung. Während einer Verschiebung der Durchströmkanäle 108 für die Getriebegänge verbindet der Rastschieber 84 kurzzeitig über den Durchgang 110 im Ventilkörper 80 die Leitung 106 mit dem Sumpf. Diese Verbindung mit dem Sumpf ist lediglich temporär und erfolgt, wenn der Rastschieber 84 sich zwischen zwei benachbarten Rastzähnen befindet. Ist der Rastschieber 84 voll eingerastet, sind die Durchströmkanäle 108 verschlossen.

Sowohl das Kupplungsventil 94 als auch das Rücklaufventil 96 werden über die Leitung 114, die mit einem Regulierventil 116 eines dritten Ventilkörpers 98 in Verbindung steht, mit Druckflüssigkeit versorgt. Ferner steht das Rücklaufventil 96 über die Leitung 120 mit einem Druckspeicher 118 des Regulierventils 116 in Verbindung. Von dem Gangwahlsteuerventil 82 wird Druckflüssigkeit über die Leitung 112 an das Regulierventil 116 geliefert. Das Regulierventil 116 seinerseits steuert den Durchfluß von Druckflüssigkeit zur Leitung 114.

Der Druckspeicher 118 enthält drei Federn und steuert die Einstellung des Regulierventils 116. Das Regulierventil 116 wird durch Druckflüssigkeit, die den Kolben des Druckspeichers 118 nach links verschiebt, in einer offenen Stellung gehalten. Die entsprechende Druckflüssigkeit wird durch die Verzögerungsdrossel 104 des Rücklaufventils 96 geliefert. Ist das Regulierventil 116 offen, so fließt Druckflüssigkeit von der Leitung 112 zur Leitung 114.

Wird die Kupplung durch die Bedienungsperson eingerückt, so fließt Druckflüssigkeit der Leitung 114 durch das Kupplungsventil 94 zur Leitung 100, welche die Druckflüssigkeit zum Richtungssteuerventil 124 im dritten Ventilkörper 98 leitet. Das Richtungssteuerventil 124 wird durch die Bedienungsperson verschoben, um wahlweise die Druckflüssigkeit der Leitung 100 entweder auf die Vorwärts- oder auf die Rückwärtskupplung zu leiten.

Während eines Gangwechsels verschiebt sich der Rücklaufschieber 102 nach links, weil die Leitung 106 über den Rastschieber 84 mit dem Sumpf verbunden wird. Der Druckspeicher 118 drückt durch die Leitung 120 Flüssigkeit gegen die rechte Seite des Rücklaufschiebers 102. Hierdurch wird der Durchfluß von Druckflüssigkeit von der Leitung 114 zu den Verzögerungsdrosseln 104 begrenzt. Ferner beginnt das Regulierventil 116 zu schließen und begrenzt den Durchfluß von Druckflüssigkeit von der Leitung 112 zur Leitung 114. Dies vermindert den Hydraulikdruck in Leitung 114, wodurch auch der Hydraulikdruck vermindert wird, der durch das Kupplungsventil 94 und die Leitung 100 auf das Richtungssteuerventil 124 übertragen wird, so daß der an die Vorwärts- und Rückwärtskupplungen angelegte Hydraulikdruck reduziert wird.

Das relativ konventionelle Lastschaltgetriebe, wie es aus den Figuren 3 und 4 hervorgeht, wurde durch einen Anschluß 130 in dem ersten Ventilkörper 80, der hydraulisch mit dem Durchgang 110 in Verbindung steht, und einen Anschluß 132, der in hydraulischer Verbindung mit der rechten Seite des Druckspeicherkolbens steht, abgewandelt. Diese beiden Anschlüsse 130 und 132 sind miteinander durch die Leitung 134 verbunden. Der Flüssigkeitsdurchfluß zwischen dem Druckspeicher 118 und dem Durchgang 110 wird durch ein Magnetventil 136 gesteuert.

Das Magnetventil 136 ist in seinem nicht erregten Zustand geschlossen. Der elektrische Schalter 70 ist elektrisch mit dem magnetischen Betätigungsorgan des Magnetventils 136 verbunden. Wenn der Schalter 70 geschlossen ist, erzeugt er ein Signal, um das Magnetventil 136 zu erregen, wodurch sich das Ventil 136 öffnet und die rechte Seite des Druckspeicherkolbens mit dem Durchgang 110 verbindet, welcher an den Sumpf angeschlossen ist.

Durch die Verbindung der rechten Seite des Druckspeicherkolbens mit dem Sumpf wird das Regulierventil 116 nach rechts verschoben, wodurch der Durchfluß von Druckflüssigkeit von der Leitung 112 zur Leitung 114 eingeschränkt wird. Hierdurch wird der Druck in den Leitungen 114 und 100 und dadurch auch der an die Vorwärts- oder Rückwärtskupplungen angelegte Hydraulikdruck vermindert. Die Vorwärts- oder Rückwärtskupplungen rutschen, wenn ein Drehmoment an die Endantriebe in Form von Bremskräften angelegt wird. Bei rutschenden Kupplungen wird der Motor jedoch nicht abgewürgt.

Wenn die Bedienungsperson das Verzögerungspedal 40 losläßt, öffnet sich der Schalter 70, und das Magnetventil 136 schließt wieder und verhindert einen Durchfluß zum Sumpf. Durch die Druckflüssigkeit, die vorbei am Rücklaufschieber 102 durch die Blende 104 in die Leitung 120 tritt, wird der Druckspeicher nach links verschoben. Dies erlaubt ein allmähliches Wiedereinrücken der Vorwärts-oder Rückwärtskupplungen.

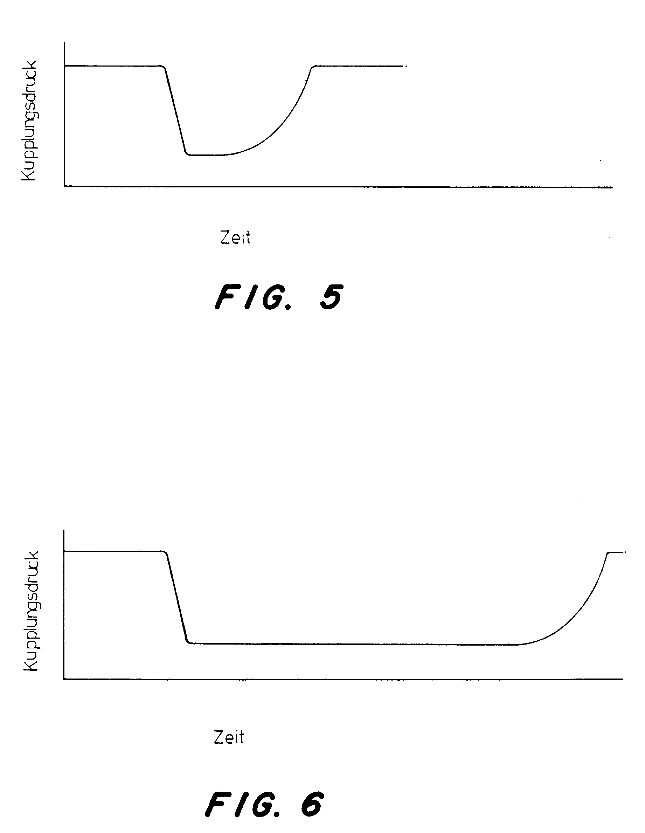

In den Figuren 5 und 6 ist der Hydraulikdruck, der an die Vorwärts- oder Rückwärtskupplungen angelegt ist, als Zeitdiagramm dargestellt. Fig. 5 zeigt einen typischen Schaltzyklus für ein Lastschaltgetriebe, bei dem der an die Kupplungen angelegte Druck ausgehend vom Systemdruck auf ein spezifisches unteres Niveau absinkt. Der Druck, der an die eingerückte Vorwärts- oder Rückwärtskupplung angelegt ist, sinkt ab, weil die rechte Seite des Druckspeicherkolbens über die Durchströmkanäle 108 mit dem Sumpf verbunden ist. Wenn der Rastschieber 84 voll eingerastet ist, steigt der an die Kupplungen angelegte Druck allmählich an, bis der Systemdruck wieder erreicht ist.

Fig. 6 stimmt mit Fig. 5 bis auf die Zeitdauer, in der sich die Vorwärts- oder Rückwärtskupplungen auf niedrigem Druckniveau befinden, überein. Die Zeitdauer spiegelt die Länge der Zeit wieder, in der das Verzögerungspedal 40 voll heruntergetreten ist. Wie dargestellt, werden die Kupplungen mit gleicher Zeitfunktion wie beim Gangwechsel des Lastschaltgetriebes wieder allmählich eingerückt.

## Patentansprüche

1. Fahrzeug mit Direktantrieb, mit einer Betätigungsvorrichtung zur Einstellung der Kraftstoffzufuhr des Verbrennungsmotors (18), mit wenigstens einer im Antriebsstrang angeordneten Kupplung, und mit Mitteln zum Ausrücken der Kupplung, die funktionsmäßig mit der Betätigungsvorrichtung verbunden sind, wobei die Mittel zum Ausrücken der Kupplung von einem mit der Betätigungsvorrichtung funktionsmäßig verbundenen elektrischen Schalter gesteuert werden, dadurch gekennzeichnet, daß das Fahrzeug ein Arbeitsfahrzeug, insbesondere ein Gleiskettenfahrzeug (10) ist, mit einem im Antriebsstrang angeordneten Lastschaltgetriebe mit Regulierkreis, welches die wenigstens eine durch den Regulierkreis ansteuerbare, hydraulisch betätigbare Kupplung enthält, daß die Betätigungsvorrichtung eine Verzögerungsvorrichtung (40) zur Drosselung der Kraftstoffzufuhr und der Ausgangsleistung des Verbrennungsmotors (18) ist und daß die Mittel zum Ausrücken der Kupplung ein durch den Schalter (70) elektrisch betätigbares Magnetventil (136) enthalten, welches hydraulisch im Regulierkreis liegt und den Hydraulikdruck der Kupplung beeinflußt.

2. Fahrzeug nach Anspruch 1, dadurch gekennzeichnet, daß die Betätigungsvorrichtung ein mit der Kraftstoffzufuhreinstelleinrichtung des Verbrennungsmotors in Verbindung stehendes Fußpedal (40) mit Übertragungsgestänge enthält und daß sich durch Niedertreten des Fußpedals (40) die Drehzahl des Motors (18) verringern läßt.

3. Fahrzeug nach Anspruch 1 oder 2, dadurch gekennzeichnet, daß der elektrische Schalter (70) bei voller Betätigung der Betätigungsvorrichtung ein Entkuppelsignal auslöst.

4. Fahrzeug nach einem der Ansprüche 1 bis 3, dadurch gekennzeichnet, daß durch den Regulierkreis Zeitfunktionen für den Ein- und/oder Auskupplungsvorgang einstellbar sind.

5. Fahrzeug nach einem der Ansprüche 1 bis 4, dadurch gekennzeichnet, daß die Kupplungen Vorwärts- und Rückwärtskupplungen sind.

6. Fahrzeug nach einem der Ansprüche 1 bis 7, dadurch gekennzeichnet, daß Mittel zur allmählichen Steigerung des nach einem Gangwechsel an die wenigstens eine Kupplung angelegten Druckes vorgesehen sind.

7. Fahrzeug nach Anspruch 6, dadurch gekennzeichnet, daß die Betätigungsvorrichtung und die Mittel zur allmählichen Steigerung des an die Kupplung angelegten Druckes den Kupplungshydraulikdruck absenken, wenn die Motorleistung vermindert wird und allmählich den Kupplungshydraulikdruck steigern, wenn die Motorleistung erhöht wird.

8. Fahrzeug nach Anspruch 6 oder 7, dadurch gekennzeichnet, daß die Mittel zur allmählichen Steigerung des an die Kupplung angelegten Druckes ein Rücklaufventil (102) mit einer Verzögerungsdrossel (104) und ein durch einen Druckspeicher (118) einstellbares Regulierventil (116) enthalten.

9. Fahrzeug nach einem der Ansprüche 1 bis 8, dadurch gekennzeichnet, daß das Magnetventil (136) hydraulisch mit einem Druckspeicher (118) und einem hydraulischen Vorratsbehälter verbunden ist und daß bei Vorliegen eines elektrischen Entkuppelsignals das Magnetventil (136) den Druckspeicher (118) hydraulisch mit dem Vorratsbehälter verbindet, wodurch das Regulierventil (116) verschoben und der an die Kupplung angelegte Hydraulikdruck vermindert wird.

## Claims

1. Vehicle with direct drive, with an actuator for adjusting the fuel supply of the internal combustion engine (18), with at least one clutch arranged in the drive train, and with means for releasing the clutch which are operatively connected to the actuator, wherein the means for releasing the clutch are controlled by an electric switch operatively connected to the actuator, characterised in that the vehicle is a working vehicle, in particular a track-laying vehicle (10), with a change-under-load gearbox with regulating circuit arranged in the drive train, which contains the at least one hydraulically operated clutch controllable by the regulating circuit, in that the actuator is a delay mechanism (40) for throttling the fuel supply and the output power of the engine (18) and in that the means for releasing the clutch contain a solenoid valve (136) which is electrically operated by the switch (70) and which is located hydraulically in the regulating circuit and influences the hydraulic pressure of the clutch.

2. Vehicle according to claim 1, characterised in that the actuator contains a foot pedal (40) with transmission linkage connected to the fuel supply adjuster of the internal combustion engine and in that the speed of the engine (18) can be reduced by depressing the foot pedal (40).

3. Vehicle according to claim 1 or 2, characterised in that the electric switch (70) triggers an uncoupling signal upon full actuation of the actuator.

4. Vehicle according to any of claims 1 to 3, characterised in that time functions for the coupling and/or uncoupling operation are adjustable by the regulating circuit.

5. Vehicle according to any of claims 1 to 4, characterised in that the clutches are forward and reverse clutches.

6. Vehicle according to any of claims 1 to 7, characterised in that means are provided for gradually increasing the pressure applied to the at least one clutch after a gear change.

7. Vehicle according to claim 6, characterised in that the actuator and the means for gradually increasing the pressure applied to the clutch lower the clutch hydraulic pressure when the engine power is reduced and gradually increase the clutch hydraulic pressure when the engine power is increased.

8. Vehicle according to claim 6 or 7, characterised in that the means for gradually increasing the pressure applied to the clutch contain a bypass valve (102) with a delay throttle (104) and a regulating valve (116) adjustable by an accumulator (118).

9. Vehicle according to any of claims 1 to 8, characterised in that the solenoid valve (136) is hydraulically connected to an accumulator (118) and a hydraulic reservoir and in that when an electrical uncoupling signal is present the solenoid valve (136) connects the accumulator (118) hydraulically to the reservoir, as a result of which the regulating valve (116) is displaced and the hydraulic pressure applied to the clutch is reduced.

## Revendications

1. Véhicule à entraînement direct, comportant un dispositif d'actionnement servant à régler l'envoi du carburant au moteur à combustion interne (18), au moins un embrayage disposé dans la chaîne motrice, et des moyens pour désenclencher l'embrayage et qui sont reliés du point de vue fonctionnel au dispositif d'actionnement, les moyens de désenclenchement de l'embrayage étant commandés par un interrupteur électrique, qui est relié de façon fonctionnelle au dispositif d'actionnement, caractérisé en ce que le véhicule est un véhicule de travail, notamment un véhicule à chenilles (10) qui est équipé d'une boîte de vitesses actionnée sous charge, qui est disposée dans la chaîne motrice et comporte un circuit de régulation, qui contient le au moins un embrayage qui peut être commandé par le circuit de régulation et peut être actionné hydrauliquement, que le dispositif d'actionnement est un dispositif de décélération (4) servant à étrangler l'envoi de carburant et réduire la puissance de sortie du moteur à combustion interne (18), et que les moyens pour désenclencher l'embrayage contiennent une soupape magnétique (136), qui peut être actionnée électriquement par l'interrupteur (70) et qui est montée, selon une liaison hydraulique, dans le circuit de régulation et influe sur la pression hydraulique de l'embrayage.

2. Véhicule selon la revendication 1, caractérisé en ce que le dispositif d'actionnement comporte une pédale (40) qui est reliée au dispositif de réglage de l'envoi de carburant du moteur à combustion interne et est équipée d'une tringlerie de transmission et que la vitesse de rotation du moteur (18) peut être réduite par enfoncement de la pédale (40).

3. Véhicule selon la revendication 1 ou 2, caractérisé en ce que l'interrupteur électrique (70) déclenche un signal de désaccouplement lorsque l'actionnement du dispositif d'actionnement est complet.

4. Véhicule selon l'une des revendications 1 à 3, caractérisé en ce que des fonctions temporelles pour le processus d'enclenchement et/ou de désenclenchement sont réglables au moyen du circuit de régulation.

5. Véhicule selon l'une des revendications 1 à 4, caractérisé en ce que les embrayages sont des embrayages de marche avant et de marche arrière.

6. Véhicule selon l'une des revendications 1 à 7, caractérisé en ce qu'il est prévu des moyens pour augmenter progressivement la pression appliquée à au moins un embrayage, après un changement de vitesse.

7. Véhicule selon la revendication 6, caractérisé en ce que le dispositif d'actionnement et les moyens d'accroissement progressifs de la pression appliquée à l'embrayage réduisent la pression hydraulique de l'embrayage lorsque la puissance du moteur est réduite, et augmentent progressivement la pression hydraulique de l'embrayage lorsque la puissance du moteur augmente.

8. Véhicule selon la revendication 6 ou 7, caractérisé en ce que les moyens d'accroissement progressif de la pression appliquée à l'embrayage contiennent une soupape antiretour (102) comportant un étranglement de décélération (104) et une soupape de régulation (116) réglable au moyen d'un accumulateur de pression (118).

9. Véhicule selon l'une des revendications 1 à 8, caractérisé en ce que la soupape magnétique (136) est reliée hydrauliquement à un accumulateur de pression (118) et à un réservoir hydraulique, et que dans le cas de la présence d'un signal électrique de désaccouplement, la soupape magnétique (136) relie hydrauliquement l'accumulateur de pression (118) au réservoir, ce qui provoque un déplacement de la soupape de régulation (116) et réduit la pression hydraulique appliquée à l'embrayage.
